(19) **Europäisches Patentamt**

**European Patent Office**

**Office européen des brevets**

(11) **EP 1 672 043 A1**

(12) **EUROPEAN PATENT APPLICATION**
published in accordance with Art. 158(3) EPC

(43) Date of publication:
**21.06.2006 Bulletin 2006/25**

(51) Int Cl.:
***C09J 7/02*** (1968.09)

(21) Application number: **04787786.5**

(22) Date of filing: **09.09.2004**

(86) International application number:
**PCT/JP2004/013122**

(87) International publication number:
**WO 2005/035681 (21.04.2005 Gazette 2005/16)**

(84) Designated Contracting States:
**DE FR GB**

(30) Priority: **10.10.2003 JP 2003352297**

(71) Applicant: **Lintec Corporation**
**Tokyo 173-0001 (JP)**

(72) Inventors:
• **KATO, Kiichiro,**
**c/o Lintec Corporation**
**Warabi-shi, Saitama 3350005 (JP)**

• **UTAGAWA, Tetsuyuki,**
**c/o Lintec Corporation**
**Warabi-shi, Saitama 3350005 (JP)**
• **ORUI, Tomoo,**
**c/o Lintec Corporation**
**Warabi-shi, Saitama 3350005 (JP)**

(74) Representative: **Nicholls, Michael John**
**J.A. KEMP & CO.**
**14, South Square**
**Gray's Inn**
**London WC1R 5JJ (GB)**

(54) **PRESSURE SENSITIVE ADHESIVE SHEET AND PROCESS FOR PRODUCING THE SAME**

(57) A substrate 2 having provided in a pressure-sensitive adhesive layer 3 side thereof recesses 21 that continue as far as side edges of the substrate 2, and a pressure-sensitive adhesive layer 3 in which are formed a plurality of penetrating passages 31 that penetrate through the pressure-sensitive adhesive layer 3 in a thickness direction are laminated together such that the recesses 21 in the substrate 2 and the penetrating passages 31 in the pressure-sensitive adhesive layer 3 communicate with one another, thus obtaining a pressure-sensitive adhesive sheet 1. According to this pressure-sensitive adhesive sheet 1, air entrapment and blistering can be prevented or eliminated while securing adequate adhesive strength and with no marring of the appearance of the pressure-sensitive adhesive sheet.

Fig.1

**Description**

TECHNICAL FIELD

The present invention relates to a pressure-sensitive adhesive sheet according to which air entrapment and blistering can be prevented or eliminated, and a method of manufacturing such a pressure-sensitive adhesive sheet.

BACKGROUND ART

When sticking a pressure-sensitive adhesive sheet onto an adherend by hand, entrapment of air between the adherend and the pressure-sensitive adhesive surface may occur, marring the appearance of the pressure-sensitive adhesive sheet. Such air entrapment is particularly prone to occur in the case that the pressure-sensitive adhesive sheet has a large area.

To eliminate problems with appearance of a pressure-sensitive adhesive sheet due to air entrapment, another pressure-sensitive adhesive sheet may be stuck on in place of the original pressure-sensitive adhesive sheet, or the original pressure-sensitive adhesive sheet may be stripped off and then reattached, or a hole may be made with a needle in a blistered portion of the pressure-sensitive adhesive sheet so as to allow the air to escape. However, in the case of sticking on a replacement pressure-sensitive adhesive sheet, effort is required, and furthermore the cost is increased; moreover, in the case of reattaching the original pressure-sensitive adhesive sheet, problems often arise such as the pressure-sensitive adhesive sheet tearing, or wrinkles forming on the surface, or the adhesiveness decreasing. On the other hand, the method of making a hole with a needle mars the appearance of the pressure-sensitive adhesive sheet.

To prevent air entrapment from occurring, there is a method in which water is put onto the adherend or the pressure-sensitive adhesive surface in advance before the two are stuck together; however, in the case of sticking on a pressure-sensitive adhesive sheet having large dimensions such as a flying glass preventing film stuck onto a window, a decorative film or a marking film, much time and effort is required. Moreover, there is a method in which air entrapment is prevented from occurring by sticking on the pressure-sensitive adhesive sheet using a machine rather than by hand; however, depending on the use of the pressure-sensitive adhesive sheet or the site or shape of the adherend, it may not be possible to use such a machine for sticking on the pressure-sensitive adhesive sheet.

Meanwhile, a resin material such as an acrylic resin, an ABS resin, a polystyrene resin or a polycarbonate resin may emit a gas upon heating or even with no heating; in the case of sticking a pressure-sensitive adhesive sheet onto an adherend made of such a resin material, blistering may occur on the pressure-sensitive adhesive sheet due to the gas emitted from the adherend.

To solve such problems, in Patent Document 1 and Patent Document 2, there is proposed a pressure-sensitive adhesive sheet in which a large number of independent small protruding portions are disposed scattered over a pressure-sensitive adhesive surface of a pressure-sensitive adhesive layer. In this pressure-sensitive adhesive sheet, a state is maintained in which the tips of the small protruding portions of the adhesive layer are in close contact with the adherend and hence a basic flat surface of the pressure-sensitive adhesive layer is separated away from the adherend, whereby gaps that communicate with the outside arise between the basic flat surface of the pressure-sensitive adhesive layer and the adherend, and hence air or gas can escape to the outside from these gaps, thus preventing air entrapment or blistering of the pressure-sensitive adhesive sheet.

Patent Document 1: Utility Model Registration No. 2503717
Patent Document 2: Utility Model Registration No. 2587198

DISCLOSURE OF THE INVENTION

Problems to be Resolved by the Invention

However, with the pressure-sensitive adhesive sheet disclosed in Patent Document 1 and Patent Document 2, there have been problems that, because only the tips of the small protruding portions of the pressure-sensitive adhesive layer are stuck to the adherend, the adhesive strength is weak, and moreover water, chemicals and so on readily infiltrate in between the pressure-sensitive adhesive layer and the adherend, whereby the adhesive strength further decreases. Even if such a pressure-sensitive adhesive sheet is strongly pressed against the adherend, the adhesive strength is still not adequate due to the influence of the small protruding portions of the pressure-sensitive adhesive layer. Moreover, in this case, the gaps communicating with the outside are filled in, and hence blistering that occurs when gas is emitted from the adherend cannot be prevented.

Means of Solving the Problems

The present invention has been devised in view of the above state of affairs; it is an object of the present invention to provide a pressure-sensitive adhesive sheet according to which air entrapment and blistering can be prevented or eliminated while securing adequate adhesive strength and with no marring of the appearance of the pressure-sensitive adhesive sheet, and a method of manufacturing such a pressure-sensitive adhesive sheet.

To attain the above object, firstly, the present invention provides a pressure-sensitive adhesive sheet comprising a substrate, and a pressure-sensitive adhesive layer laminated on the substrate, the pressure-sensitive adhesive sheet characterized in that gas-passing channels that communicate to the outside of the pressure-sensitive adhesive sheet are formed in at least the pressure-sensitive adhesive layerside ofthesubstrate,a plurality of penetrating passages that penetrate or are capable of penetrating through the pressure-sensitive adhesive layer in a thickness direction are formed in the pressure-sensitive adhesive layer, and the gas-passing channels in the substrate and the penetrating passages in the pressure-sensitive adhesive layer communicate with one another (invention 1).

Here, the substrate may be a single layer, or may comprise a plurality of layers. Note that in the present specification, "sheet" is deemed to include the idea of a film, and "film" is deemed to include the idea of a sheet. Moreover, "penetrating passages that are capable of penetrating through the pressure-sensitive adhesive layer in a thickness direction" in the present specification means penetrating passages that may not penetrate through the pressure-sensitive adhesive layer in the thickness direction in an ordinary state, but do penetrate through the pressure-sensitive adhesive layer in the thickness direction upon compression-bonding or the like of the pressure-sensitive adhesive sheet, or due to the pressure of an emitted gas or the like.

With the pressure-sensitive adhesive sheet according to the above invention (invention 1), air between an adherend and the pressure-sensitive adhesive surface escapes from the penetrating passages in the pressure-sensitive adhesive layer via the gas-passing channels in the substrate to the outside of the pressure-sensitive adhesive sheet, and hence air tends not to be caught up when sticking the pressure-sensitive adhesive sheet to the adherend, i.e. air entrapment can be prevented from occurring. Even if air is caught up so that air entrapment occurs, by re-pressing the air-entrapped portion or an air-entrapped portion surrounding portion including the air-entrapped portion, the air can be made to escape from the penetrating passages in the pressure-sensitive adhesive layer via the gas-passing channels in the substrate to the outside of the pressure-sensitive adhesive sheet, thus eliminating the air entrapment. Moreover, even if gas is emitted from the adherend after the pressure-sensitive adhesive sheet has been stuck onto the adherend, the gas will escape from the penetrating passages in the pressure-sensitive adhesive layer via the gas-passing channels in the substrate to the outside of the pressure-sensitive adhesive sheet, whereby blistering can be prevented from occurring.

Note that the plurality of penetrating passages in the pressure-sensitive adhesive layer must be independent from one another at least at the pressure-sensitive adhesive surface of the pressure-sensitive adhesive layer so that water or the like will not infiltrate in between the pressure-sensitive adhesive surface of the pressure-sensitive adhesive layer and the adherend, but in regions other than at the pressure-sensitive adhesive surface of the pressure-sensitive adhesive layer, the plurality of penetrating passages may communicate with one another, and may communicate to the outside of the pressure-sensitive adhesive sheet.

In the case of the above invention (invention 1), recesses that continue as far as side edges of the substrate may be provided in the pressure-sensitive adhesive layer side of the substrate, (invention 2), or at least the pressure-sensitive adhesive layer side of the substrate may comprise a foam containing open cells (invention 3).

In the case of the above inventions (inventions 1 to 3), the penetrating passages in the pressure-sensitive adhesive layer may be formed through gas passing through the pressure-sensitive adhesive layer (invention 4), or may be formed by laser processing (invention 5), or may be formed by patterning when forming the pressure-sensitive adhesive layer (invention 6), or may be constituted from foam cells (invention 7).

Here, the foam cells in the above invention (invention 7) may be open cells that penetrate through the pressure-sensitive adhesive layer in the thickness direction, or may be individual cells that penetrate through the pressure-sensitive adhesive layer in the thickness direction due to the foam film disappearing at surface portions of the pressure-sensitive adhesive layer, or may be individual cells that are capable of penetrating through the pressure-sensitive adhesive layer in the thickness direction upon the foam film at surface portions of the pressure-sensitive adhesive layer being broken by external force, or may be closed cells that are capable of penetrating through the pressure-sensitive adhesive layer in the thickness direction upon the foam film or walls between foam cells being broken by external force.

Secondly, the present invention provides a method of manufacturing a pressure-sensitive adhesive sheet, characterized by laminating or forming a pressure-sensitive adhesive layer having therein a plurality of penetrating passages that penetrate or are capable of penetrating through in a thickness direction of the layer onto one surface of a substrate at least the one surface of which is formed with gas-passing channels that communicate to the outside of the pressure-sensitive adhesive sheet, such that the gas-passing channels in the substrate and the penetrating passages in the pressure-sensitive adhesive layer communicate with one another (invention 8).

In the case of the above invention (invention 8), recesses that continue as far as side edges of the substrate may be provided in the one surface of the substrate so as to form the gas-passing channels in the substrate (invention 9), or at least the one surface of the substrate may comprise a foam containing open cells (invention 10).

In the case of the above inventions (inventions 8 to 10), it may be that a pressure-sensitive adhesive layer is formed by coating a pressure-sensitive adhesive onto a release treated surface of a release liner the release treated surface of which is formed with a plurality of holes (holes that do not penetrate through the release liner), and gas from the holes in the release liner is made to move to the outside of the pressure-sensitive adhesive layer so as form the penetrating passages in the pressure-sensitive adhesive layer (invention 11).

In the case of the above invention (invention 11), it may be that the release liner has a support made of a material containing air and/or moisture, a release agent layer is formed by coating a release agent onto the support of the release liner, and air and/or water vapor from the support is made to move to the outside of the release agent layer so as to form holes in the release agent layer (invention 12), or it may be that the release liner has a support made of a material containing air and/or moisture, an undercoat layer is formed on the support of the release liner, air and/or water vapor from the support is made to move to the outside of the undercoat layer so as to form holes in the undercoat layer, and a release agent is coated onto the undercoat layer having the holes therein so as to form a release agent layer having holes therein (the holes in the release agent layer are preferably formed by making air and/or water vapor from the holes in the undercoat layer move to the outside of the release agent layer) (invention 13), or it may be that the release liner has a support made of a material containing air and/or moisture, an undercoat layer and a release agent layer are formed in order on the support of the release liner, and air and/or water vapor from the support is made to move to the outside of the release agent layer so as to form holes in the undercoat layer and the release agent layer (invention 14), or it may be that an undercoat layer having holes therein is formed on a support of the release liner with a foamed sealer, and a release agent is coated onto the undercoat layer having the holes therein so as to form a release agent layer having holes therein (invention 16).

In the case of the above inventions (inventions 12 to 14), a gas barrier layer is preferably formed in advance on a non-release treated surface side of the support (invention 15).

In the case of the above inventions (inventions 8 to 10), the penetrating passages may be formed in the pressure-sensitive adhesive layer by subjecting the pressure-sensitive adhesive layer to laser processing (invention 17), or the penetrating passages may be formed in the pressure-sensitive adhesive layer by forming foam cells in the pressure-sensitive adhesive layer (invention 18), or the penetrating passages may be formed in the pressure-sensitive adhesive layer by coating a pressure-sensitive adhesive in a prescribed pattern (invention 21).

Here, the method of forming the foam cells in the pressure-sensitive adhesive layer in the above invention (invention 18) may be a method in which the pressure-sensitive adhesive is foamed before being coated on, or a method in which the pressure-sensitive adhesive is foamed after being coated on. The foam cells in this case may be open cells that penetrate through the pressure-sensitive adhesive layer in the thickness direction, or may be individual cells that penetrate through the pressure-sensitive adhesive layer in the thickness direction due to the foam film disappearing at surface portions of the pressure-sensitive adhesive layer, or may be individual cells that are capable of penetrating through the pressure-sensitive adhesive layer in the thickness direction upon the foam film at surface portions of the pressure-sensitive adhesive layer being broken by external force, or maybe closed cells that are capable of penetrating through the pressure-sensitive adhesive layer in the thickness direction upon the foam film or walls between foam cells being broken by external force.

In the case of the above invention (invention 10), it may be that a pressure-sensitive adhesive is directly coated onto the foam of the substrate, and penetrating passages that communicate with cell openings in the foam are formed in the pressure-sensitive adhesive layer (invention 19). In this case, it may be that the thickness of application of the pressure-sensitive adhesive is changed from region to region, and the penetrating passages that communicate with the cell openings in the foam are formed in regions where the pressure-sensitive adhesive layer is thin or regions where the pressure-sensitive adhesive layer is not formed (invention 20).

Thirdly, the present invention provides a release liner, characterized in that a plurality of holes of diameter 0.1 to 2000 μm that do not penetrate through the release liner are formed in a release treated surface side (invention 22). Such a release liner can be suitably used for forming a pressure-sensitive adhesive layer having penetrating passages therein.

Fourthly, the present invention provides a method of manufacturing a release liner, characterized by coating a release agent onto a support made of a material containing air and/or moisture so as to form a release agent layer, and making air and/or water vapor from the support move to the outside of the release agent layer so as to form holes in the release agent layer (invention 23).

Fifthly, the present invention provides a method of manufacturing a release liner, characterized by forming an undercoat layer on a support made of a material containing air and/or moisture, making air and/or water vapor from the support move to the outside of the undercoat layer so as to form holes in the undercoat layer, and coating a release agent onto the undercoat layer having the holes therein to form a release agent layer having holes therein (invention 24). Here, the holes in the release agent layer are preferably formed by making air and/or water vapor from the holes in the undercoat layer move to the outside of the release agent layer.

Sixthly, the present invention provides a method of manufacturing a releaseliner, characterized by forming an undercoat layer and a release agent layer in order on a support made of a material containing air and/or moisture, and making air and/or water vapor from the support move to the outside of the release agent layer so as to form holes in the undercoat layer and the release agent layer (invention 25).

In the case of the above inventions (inventions 23 to 25), a gas barrier layer is preferably formed in advance on a non-release treated surface side of the support (invention 26).

Seventhly, the present invention provides a method of manufacturing a release liner, characterized by forming on a support an undercoat layer having holes therein with a foamed sealer, and coating a release agent onto the undercoat layer having the holes therein to form a release agent layer having holes therein (invention 27).

Effects of the Invention

According to the present invention, a pressure-sensitive adhesive sheet is obtained according to which air entrapment and blistering can be prevented or eliminated while securing adequate adhesive strength and with no marring of the appearance of the pressure-sensitive adhesive sheet.

BRIEF DESCRIPTION OF THE DRAWINGS

FIG. 1 is a sectional view of a pressure-sensitive adhesive sheet according to a first embodiment of the present invention;

FIG. 2 is a plan view of a rear face of a substrate in the pressure-sensitive adhesive sheet according to the above embodiment;

FIG. 3 consists of sectional views showing an example of a method of manufacturing a release liner and a pressure-sensitive adhesive layer in the pressure-sensitive adhesive sheet according to the above embodiment;

FIG. 4 is a sectional view showing another example of a method of manufacturing the release liner and the pressure-sensitive adhesive layer in the pressure-sensitive adhesive sheet according to the above embodiment;

FIG. 5 is a sectional view of a pressure-sensitive adhesive sheet according to a second embodiment of the present invention (first example);

FIG. 6 is a sectional view of a pressure-sensitive adhesive sheet according to the second embodiment of the present invention (second example);

FIG. 7 is a sectional view of a pressure-sensitive adhesive sheet according to a third embodiment of the present invention;

FIG. 8 is a sectional view of a pressure-sensitive adhesive sheet according to a fourth embodiment of the present invention; and

FIG. 9 is a sectional view of a pressure-sensitive adhesive sheet according to a fifth embodiment of the present invention.

EXPLANATION OF REFERENCES

1, 1A, 1A', 1B, 1C, 1D...pressure-sensitive adhesive sheet
2, 2A, 2B, 2C, 2D...substrate
21, 21A...recess
23B, 23C, 23D...foam layer (foam)
3, 3A, 3A', 3B, 3C, 3D...pressure-sensitive adhesive layer
31, 31A', 31B, 31C...penetrating passage
4, 4A, 4C, 4D...release liner
41...support
42...gas barrier layer
43...undercoat layer
44...release agent layer
431, 441...hole

BEST MODE FOR CARRYING OUT THE INVENTION

Following is a description of embodiments of the present invention.

[First embodiment]

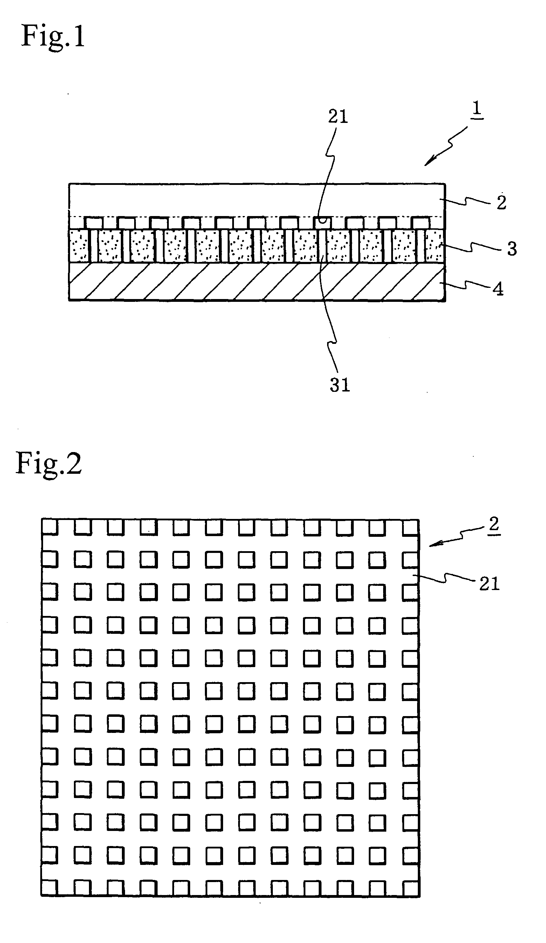

FIG. 1 is a sectional view of a pressure-sensitive adhesive sheet 1 according to a first embodiment of the present invention.
As shown in FIG. 1, the pressure-sensitive adhesive sheet 1 according to the present embodiment comprises a substrate 2, a pressure-sensitive adhesive layer 3, and a release liner 4 laminated on one another. Note, however, that the release liner 4 is stripped off when using the pressure-sensitive adhesive sheet 1.
Recesses 21 that continue as far as side edges of the substrate 2 are provided in the pressure-sensitive adhesive layer 3 side of the substrate 2 in the present embodiment. As described later, gas frompenetrating passages 31 in the pressure-sensitive adhesive layer 3 passes through these recesses 21 and escapes to the outside of the pressure-sensitive adhesive sheet 1, and hence so that the direction of escape of the gas is not restricted, it is preferable for ends of the recesses 21 to be present at a plurality of edges of the substrate 2, more preferably all of the edges (i.e. around the whole periphery) of the substrate 2. In the present embodiment, the recesses 21 form a square lattice in plan view as shown in FIG. 2, and hence ends of the recesses 21 are present on all sides of the rectangular substrate 2. Note, however, that the shape of the recesses 21 in plan view is not limited to being a square lattice, but rather may be, for example, a honeycomb shape, or may be a shape formed from a plurality of circles connected together.
Such recesses 21 can be formed by subjecting a rear face of the substrate 2 to, for example, embossing, etching, application of a resin, printing, or the like; so long as the adhesiveness to the pressure-sensitive adhesive layer 3 is secured, there are no particular limitations on the method of forming the recesses 21. In the case of applying on a resin, regions where the resin is applied become protuberances, and regions where the resin is not applied become the recesses 21; in this case, the applied resin may be foamed.
There are no particular limitations on the material of the substrate 2 so long as this is a material in which the recesses 21 can be formed as described above; examples include a resin film, a metal film, a resin film having a metal deposited thereon by vapor deposition, paper, a nonwoven cloth, or a laminate of the above.
As a resin film, there can be used, for example, a film or a foamed filmmade of a resin such as a polyolefin such as polyethylene or polypropylene, a polyester such as polyethylene terephthalate or polybutylene terephthalate, polyvinyl chloride, polystyrene, a polyurethane, a polycarbonate, a polyamide, a polyimide, polymethyl methacrylate, polybutene, polybutadiene, polymethylpentene, an ethylene-vinyl acetate copolymer, an ethylene-(meth)acrylic acid copolymer, an ethylene-(meth)acrylate ester copolymer, an ABS resin, an ionomer resin or the like, or a laminated film of the above. Moreover, as paper, there can be used, for example, woodfree paper, glassine paper, coated paper, laminated paper, or the like.
The thickness of the substrate 2 is generally approximately 1 to 500 $\mu$m, preferably 3 to 300 $\mu$m, but may be changed as appropriate in accordance with the use of the pressure-sensitive adhesive sheet 1.
There are no particular limitations on the vertical sectional shape of the recesses 21, but the width of the recesses 21 is preferably 1 to 1000 $\mu$m, particularly preferably 5 to 300 $\mu$m. Moreover, the pitch of the recesses 21 (this refers to the width of the spacing between adjacent recesses 21; likewise hereinafter) is preferably 50 to 2000 $\mu$m, particularly preferably 100 to 1500 $\mu$m. Furthermore, the depth of the recesses 21 is preferably 1 to 300 $\mu$m, particularly preferably 3 to 30 $\mu$m. If the width of the recesses 21 is less than 1 $\mu$m or the depth of the recesses 21 is less than 1 $\mu$m, then it will difficult for gas to pass through the recesses 21, and if the pitch of the recesses 21 is greater than 2000 $\mu$m, then escape of gas will be poor. Moreover, if the width of the recesses 21 is greater than 1000 $\mu$m, or the pitch of the recesses 21 is less than 50 $\mu$m, then the adhesive strength between the substrate 2 and the pressure-sensitive adhesive layer 3 may decrease, and if the depth of the recesses 21 is greater than 300 $\mu$m, then it may be possible to discern the presence of the recesses 21 from the surface of the substrate 2, and hence the appearance of the pressure-sensitive adhesive sheet 1 may be marred.
The occupancy (area ratio) of the recesses 21 out of the rear face of the substrate 2 is preferably 5 to 70%, particularly preferably 15 to 60%. If the occupancy of the recesses 21 is less than 5%, then regions where it is difficult to prevent or eliminate air entrapment and blistering may arise, whereas if the occupancy of the recesses 21 is greater than 70%, then the adhesive strength between the substrate 2 and the pressure-sensitive adhesive layer 3 may decrease.
Meanwhile, a plurality of penetrating passages 31 that penetratethroughthepressure-sensitive adhesive layer 3 are formed in the pressure-sensitive adhesive layer 3 in the present embodiment, the penetrating passages 31 communicating with the recesses 21 in the substrate 2.
There are no particular limitations on the horizontal cross sectional shape of the penetrating passages 31, but in the case that the horizontal cross sectional shape of the penetrating passages 31 is circular, the diameter of the penetrating passages 31 is preferably 0.1 to 2000 $\mu$m, particularly preferably 0.5 to 1500 $\mu$m. If the diameter of the penetrating passages 31 is less than 0.1 $\mu$m, then it will be difficult for gas to pass through the penetrating passages 31, whereas if the diameter of the penetrating passages 31 is greater than 2000 $\mu$m, then the adhesive strength of the pressure-sensitive adhesive layer 3 may decrease. The diameter of the penetrating passages 31 may be constant in the thickness direction of the pressure-sensitive adhesive layer 3, or may change in the thickness direction of the pressure-sensitive adhesive layer 3.

The number density of the penetrating passages 31 is preferably 30 to 100,000 per 100 cm$^2$, particularly preferably 100 to 50,000 per 100 cm$^2$. If the number density of the penetrating passages 31 is less than 30 per 100 cm$^2$, then it will be difficult for gas to escape, whereas if the number density of the penetrating passages 31 is greater than 100,000 per 100 cm$^2$, then the adhesive strength of the pressure-sensitive adhesive layer 3 may decrease.

There are no particular limitations on the type of the pressure-sensitive adhesive constituting the pressure-sensitive adhesive layer 3 so long as this pressure-sensitive adhesive is a material in which the penetrating passages 31 can be formed as described above; the pressure-sensitive adhesive may be any of an acrylic type, a polyester type, a polyurethane type, a rubber type, a silicone type, or the like. Moreover, the pressure-sensitive adhesive may be any of an emulsion type, a solvent type, or a solvent-less type, and may be either a crosslinked type that is subjected to thermal crosslinking, ionizing radiation crosslinking or the like, or a non-crosslinked type.

The thickness of the pressure-sensitive adhesive layer 3 is preferably 1 to 300 $\mu$m, particularly preferably 3 to 100 $\mu$m, but may be changed as appropriate in accordance with the use of the pressure-sensitive adhesive sheet 1 and the method of forming the penetrating passages 31.

Examples of methods of forming the penetrating passages 31 in the pressure-sensitive adhesive layer 3 include (1) a method in which the penetrating passages 31 are formed through gas passing through the pressure-sensitive adhesive layer 3, (2) a method in which the penetrating passages 31 are formed by mechanical processing such as laser processing, and (3) a method in which the penetrating passages 31 are formed by patterned coating when forming the pressure-sensitive adhesive layer. Following is a description of each of these examples.

(1) Method in which the penetrating passages 31 are formed through gas passing through the pressure-sensitive adhesive layer 3

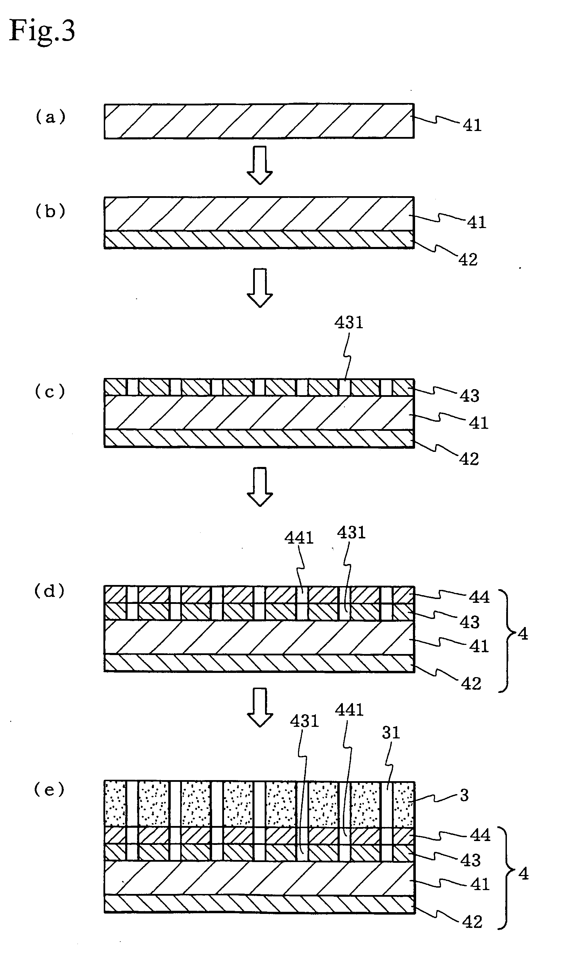

In this formation method, the pressure-sensitive adhesive is coated onto a release treated surface of the release liner 4 in which a plurality of holes have been formed on the release treated surface side, and gas (air, water vapor, etc.) from the holes in the release liner 4 is made to move in the pressure-sensitive adhesive, whereby the penetrating passages 31 are formed in the pressure-sensitive adhesive layer 3. One example of this penetrating passage formation method will now be described with reference to FIGS. 3(a) to (e).

Firstly, a support 41 for the release liner 4 as shown in FIG. 3 (a) is prepared. As this support 41, a material containing air, moisture or the like, for example any of various types of paper, a nonwoven cloth, or a foamed film obtained by foaming a resin such as polyethylene terephthalate, polypropylene or polyethylene can be used. The thickness of the support 41 is generally approximately 10 to 250 $\mu$m, preferably approximately 20 to 200 $\mu$m. Moreover, the voidage of the support 41 is preferably 5 to 80%, particularly preferably 10 to 60%.

In the present specification, the voidage is represented by the following formula.

$$\text{Voidage } (\%) = (W_2 - W_1)/W_2 \times 100$$

$W_1$: Weight per unit volume of material in case that material has foam cells therein
$W_2$: Weight per unit volume of material in case that material does not have foam cells therein.

A layer having low gas permeability, i.e. a gas barrier layer 42, is formed on one surface (the lower surface in FIG. 3) of the support 41 as shown in FIG. 3 (b) . Such a gas barrier layer 42 can be formed, for example, by coating on a resin such as polyethylene, polypropylene, polyvinyl alcohol, an acrylic resin, a polyester, an epoxy resin, an ethylene-vinyl acetate copolymer, or an ethylene-vinyl alcohol copolymer, or by laminating on a film made of such a resin. The thickness of the gas barrier layer 42 is generally approximately 1 to 50 $\mu$m, preferably 5 to 30 $\mu$m.

Next, as shown in FIG. 3(c), an undercoat layer 43 is formed on the other surface (the upper surface in FIG. 3) of the support 41. The undercoat layer 43 may be a layer made of a sealer for preventing a release agent from impregnating into the support 41, or may be a layer made of a laminating resin for improving the smoothness of a release agent layer 44, described below.

As a sealer, for example a resin such as polyvinyl alcohol, starch, styrene-butadiene rubber (SBR), an acrylic resin, a polyester, or a polyethylene, mixed with a filling agent such as clay or talc as required can be used.

The coating on of the sealer can be carried out, for example, using a coater such as a roll coater, a knife coater, a roll knife coater, an air knife coater, a die coater, a bar coater, a gravure coater, or a curtain coater.

As a laminating resin, for example a resin such as polyethylene or polypropylene can be used; the laminating may be carried out using an ordinary method.

The thickness of an undercoat layer 43 made of a sealer is preferably 1 to 30 $\mu$m, particularly preferably 3 to 20 $\mu$m. Moreover, the thickness of an undercoat layer 43 made of a laminating resin is preferably 0.1 to 30 $\mu$m, particularly preferably 0.5 to 20 $\mu$m.

In the present formation method, gas such as air or moisture (water vapor) contained in the support 41 is made to move to the outside of the undercoat layer 43, whereby holes 431 are formed in the undercoat layer 43.

The movement of the air or moisture contained in the support 41 to the outside of the undercoat layer 43 can be carried out, for example, by heating the support 41 on which the undercoat layer 43 has been formed. Through this heating, air contained in the support 41 expands, or moisture contained in the support 41 vaporizes to form water vapor, and the expanded air or water vapor tries to escape to the outside of the support 41; however, because the gas barrier layer 42 has been formed on one surface of the support 41, the air or water vapor moves to the other surface of the support 41, i.e. to the undercoat layer 43 side. The gas such as air or water vapor escapes to the outside while pushing the undercoat layer 43 out of the way, and hence the parts through which the gas passes become the holes 431 in the undercoat layer 43.

The diameter of the holes 431 formed in the undercoat layer 43 is preferably 0.1 to 2000 $\mu$m, particularly preferably 10 to 1500 $\mu$m. Moreover, the number density of the holes 431 is preferably 30 to 100,000 per 100 cm$^2$, particularly preferably 100 to 50,000 per 100 cm$^2$.

Next, as shown in FIG. 3(d), a release agent is coated onto the undercoat layer 43 so as to form the release agent layer 44. At this time, the release agent layer 44 is formed such that holes 441 are formed therein in positions corresponding to the holes 431 in the undercoat layer 43. Specifically, the release agent is coated on such that the release agent layer 44 is not attached at the sites of the holes 431 in the undercoat layer 43, or else gas from the holes 431 in the undercoat layer 43 is made to move to the outside of the release agent layer 44, whereby the holes 441 are formed in the release agent layer 44.

Regarding the latter method, as for the method of forming the holes in the undercoat layer 43, this can be carried out, for example, by heating the support 41 on which the release agent has been coated. That is, through the heating, air present inside the support 41 or in the holes 431 in the undercoat layer 43 expands, or moisture contained in the support 41 vaporizes to form water vapor, and the expanded air or water vapor escapes from the holes 431 in the undercoat layer 43 to the outside of the release agent layer 44 while pushing the release agent out of the way, and hence the parts through which the gas such as air or water vapor passes become the holes 441 in the release agent layer 44.

As the release agent, for example a silicone type one, a fluorine type one, a long chain alkyl group-containing carbamate, or the like can be used. Moreover, the coating on of the release agent can be carried out, for example, using a coater such as a roll coater, a knife coater, a roll knife coater, an air knife coater, a die coater, a bar coater, a gravure coater, or a curtain coater.

The thickness of the release agent layer 44 is preferably 0.1 to 2.0 $\mu$m, particularly preferably 0.5 to 1.5 $\mu$m. The diameter and number density of the holes 441 formed in the release agent layer 44 will be approximately equal to the diameter and number density of the holes 431 in the undercoat layer 43.

Once the release liner 4 comprising the gas barrier layer 42, the support 41, the undercoat layer 43, and the release agent layer 44 has been obtained as described above, the pressure-sensitive adhesive layer 3 is formed on the release agent layer 44 of the release liner 4. At this time, gas such as air or moisture (water vapor) present inside the support 41 or in the holes 431 in the undercoat layer 43 and the holes 441 in the release agent layer 44 is made to move to the outside of the pressure-sensitive adhesive layer 3, thus forming the penetrating passages 31 in the pressure-sensitive adhesive layer 3.

The movement (rising) of the gas in the pressure-sensitive adhesive may be allowed to take place naturally through the buoyancy of the gas, or may be brought about by drying the release liner 4 by heating when the pressure-sensitive adhesive has been coated on. When the gas moves through the pressure-sensitive adhesive, the gas escapes to the outside of the pressure-sensitive adhesive layer 3 while pushing the pressure-sensitive adhesive out of the way, and hence the parts through which the gas passes become the penetrating passages 31 in the pressure-sensitive adhesive layer 3.

If the pressure-sensitive adhesive layer 3 is heated when the pressure-sensitive adhesive is coated on, then air present inside the support 41 or in the holes 431 in the undercoat layer 43 and the holes 441 in the release agent layer 44 expands, or moisture contained in the support 41 vaporizes to form water vapor, and hence the amount of gas that moves through the pressure-sensitive adhesive layer 3 increases, whereby the penetrating passages 31 can be formed more efficiently. By changing the heating temperature, the heating pattern and so on, the size (diameter) of the penetrating passages 31 formed in the pressure-sensitive adhesive layer 3 can be controlled. The heating temperature is preferably in a range of room temperature to 150 °C.

The pressure-sensitive adhesive layer 3 may be formed by preparing a coating agent containing the pressure-sensitive adhesive that will constitute the pressure-sensitive adhesive layer 3, and also a solvent if desired, applying the coating agent onto the release agent layer 44 of the release liner 4 using a coater such as a roll coater, a knife coater, a roll knife coater, an air knife coater, a die coater, a bar coater, a gravure coater, or a curtain coater, and drying.

Here, the viscosity of the pressure-sensitive adhesive coating agent is preferably made to be not more than 20, 000 mPa·s at 6 rpm with a B-type viscometer. If the viscosity of the pressure-sensitive adhesive coating agent is too high, then the movement of the gas may be impeded, and moreover even if the penetrating passages 31 are formed, rising up may occur around the openings of the penetrating passages 31 resulting in a decrease in the surface smoothness of the pressure-sensitive adhesive layer 3.

The above penetrating passage formation method is only one example, and, for example, the release agent layer 44 may instead be formed on the support 41 directly without forming the undercoat layer 43. In this case as well, the holes 441 can be formed in the release agent layer 44 as in the penetrating passage formation method described above. Moreover, the holes 431 may be formed in the undercoat layer 43 even if air or moisture contained in the support 41 is not used, by foaming the sealer forming the undercoat layer 43.

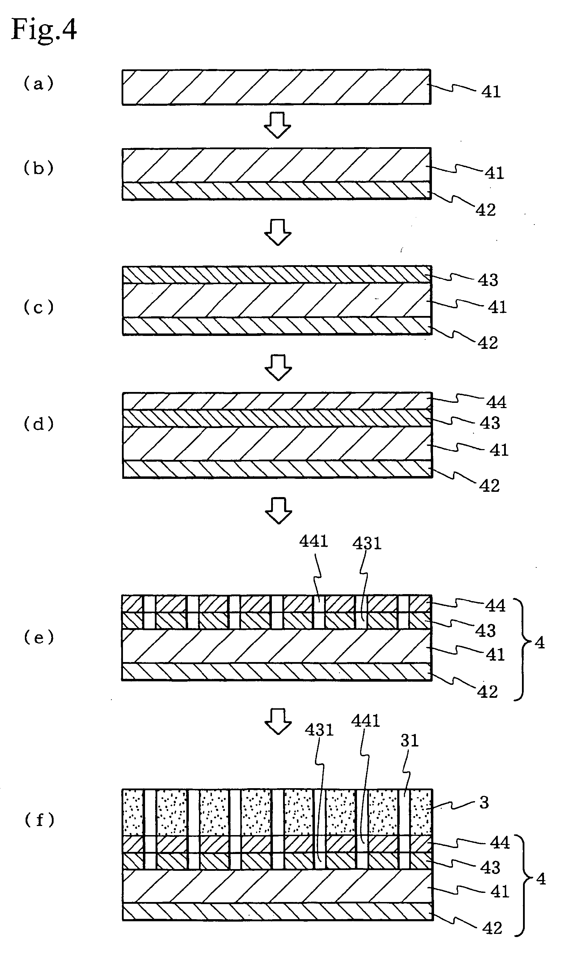

Another example of the present penetrating passage formation method will now be described with reference to FIGS. 4 (a) to (f) .

In the present example, the formation of the gas barrier layer 42 (FIGS. 4(a) and (b)) and the formation of the undercoat layer 43 (FIG. 4 (c)) on the support 41 may be carried out as in the above penetrating passage formation method.

Once the undercoat layer 43 has been formed, as shown in FIG. 4(d), the release agent layer 44 is formed as in the above penetrating passage formation method without forming holes in the undercoat layer 43. Then, as shown in FIG. 4(e), gas such as air or moisture (water vapor) contained in the support 41 is made to move to the outside of the release agent layer 44 via the undercoat layer 43, thus forming the holes 431 and 441 in the undercoat layer 43 and the release agent layer 44. The movement of the air or moisture contained in the support 41 to the outside of the release agent layer 44 can be brought about as in the above penetrating passage formation method.

After that, the pressure-sensitive adhesive layer 3 having the penetrating passages 31 therein is formed on the release agent layer 44 in which the holes 441 have been formed (FIG. 4 (f)) ; this formation of the pressure-sensitive adhesive layer 3 may be carried out as in the above penetrating passage formation method.

(2) Method in which the penetrating passages 31 are formed by mechanical processing

In this formation method, the penetrating passages 31 are formed in the pressure-sensitive adhesive layer 3 by mechanical processing such as laser processing, water jet processing, micro-drilling, precision pressing, or hot needle processing. Of these types of mechanical processing, laser processing, through which fine penetrating passages 31 having good air releasing ability can be easily formed with a number density as stipulated earlier, is preferable.

There are no particular limitations on the type of the laser used in the laser processing; for example, a carbon dioxide ($CO_2$) laser, a TEA-$CO_2$ laser, a YAG laser, a UV-YAG laser, an excimer laser, a semiconductor laser, a $YVO_4$ laser, a YLF laser, or the like can be used.

There are no particular limitations on the carrying out of the laser processing, whichmaybe carried out on a two-layer laminate of the pressure-sensitive adhesive layer 3 and the release liner 4, being carried out on only the pressure-sensitive adhesive layer 3, or may be carried out so as to penetrate through the laminate from either surface of such a two-layer laminate, or may be carried out so as to penetrate through the laminate from either surface of a three-layer laminate of a process material, the pressure-sensitive adhesive layer 3 and the release liner 4 that has been obtained by covering the surface of the pressure-sensitive adhesive layer 3 with the process material, or may be carried out on the pressure-sensitive adhesive layer 3 and the release liner 4 which have been superposed to the substrate 2, this being from the release liner 4 side so as not to penetrate through the substrate 2.

The process material is a material obtained by providing a release agent layer on the surface of a support; as the support of the process material and the release agent for the release agent layer, ones like the support 41 of the release liner 4 and the release agent for the release agent layer 44 can be used.

In the case of using such a process material, dross (thermally fused matter) produced through the laser processing will become attached around the openings in the process material and/or the release liner 4 rather than the pressure-sensitive adhesive layer 3, and hence the surface smoothness of the pressure-sensitive adhesive layer 3 can be maintained. In this case, after the penetrating passages 31 have been formed in the pressure-sensitive adhesive layer 3, the process material is stripped off from the pressure-sensitive adhesive layer 3, and the substrate 2 is laminated onto the pressure-sensitive adhesive layer 3.

Note that in the case of forming the penetrating passages 31 by laser processing, the diameter of the penetrating passages 31 may become progressively smaller from one surface of the pressure-sensitive adhesive layer 3 toward the other surface, but this is not excluded from the present invention.

(3) Method in which the penetrating passages 31 are formed by patterned coating when forming the pressure-sensitive adhesive layer

In this formation method, when the pressure-sensitive adhesive layer 3 is formed, the pressure-sensitive adhesive is coated on in a prescribed pattern, whereby the penetrating passages 31 are formed in the pressure-sensitive adhesive layer 3 obtained.

The coating on of the pressure-sensitive adhesive can be carried out using a coater such as a knife coater, a roll coater, a die coater, a micro-die coater, or a spray coater, provided with suitable blocking means for parts where the pressure-sensitive adhesive is not to be applied, or a printer such as a silk screen printer, a rotary screen printer, an offset printer, a gravure printer, or a flexographic printer.

There are no particular limitations on the pattern shape for the pressure-sensitive adhesive layer 3, i.e. on the horizontal cross sectional shape of the penetrating passages 31 and the arrangement of the penetrating passages 31; a pattern shape such that penetrating passages 31 having a size as stipulated earlier (in the case that the horizontal cross sectional shape of the penetrating passages 31 is circular, this size is the cross sectional area stipulated by the diameter) are formed with a number density as stipulated earlier is suitable.

As the release liner 4, a publicly known release liner, for example a film or foamed film made of a resin such as polyethylene terephthalate, polypropylene or polyethylene, or paper such as glassine paper, coated paper or laminated paper that has been subjected to release treatment with a release agent such as a silicone type one, a fluorine type one or a long chain alkyl group-containing carbamate can be used.

The pressure-sensitive adhesive sheet 1 according to the present embodiment can be manufactured by coating the pressure-sensitive adhesive in a pattern onto the release treated surface of the release liner 4 so as to form the pressure-sensitive adhesive layer 3, and then superposing the pressure-sensitive adhesive layer 3 thus obtained and the surface of the substrate 2 in which the recesses 21 have been formed together, or by directly coating the pressure-sensitive adhesive in a pattern onto the surface of the substrate 2 in which the recesses 21 have been formed so as to form the pressure-sensitive adhesive layer 3, and then superposing the pressure-sensitive adhesive layer 3 thus obtained and the release treated surface of the release liner 4 together.

There are no particular limitations on the size, shape and so on of the pressure-sensitive adhesive sheet 1 according to the present embodiment.

When sticking the pressure-sensitive adhesive sheet 1 onto an adherend, the release liner 4 is stripped off from the pressure-sensitive adhesive layer 3, the pressure-sensitive adhesive sheet 1 is pressed onto the adherend so that the pressure-sensitive adhesive surface of the exposed pressure-sensitive adhesive layer 3 is made to be in close contact with the adherend. At this time, air between the adherend and the pressure-sensitive adhesive surface of the pressure-sensitive adhesive layer 3 escapes from the penetrating passages 31 formed in the pressure-sensitive adhesive layer 3 via the recesses 21 in the substrate 2 to the outside of the side edges of the pressure-sensitive adhesive sheet 1, and hence air tends not to be caught up between the adherend and the pressure-sensitive adhesive surface, i.e. air entrapment is prevented from occurring. Even if air is caught up so that air entrapment occurs, by re-pressing the air-entrapped portion or an air-entrapped portion surrounding portion including the air-entrapped portion, the air can be made to escape from the penetrating passages 31 in the pressure-sensitive adhesive layer 3 via the recesses 21 in the substrate 2 to the outside of the side edges of the pressure-sensitive adhesive sheet 1, thus eliminating the air entrapment. Such elimination of air entrapment is possible even after a long time has elapsed after the sticking on of the pressure-sensitive adhesive sheet 1.

Moreover, even if gas is emitted from the adherend after the pressure-sensitive adhesive sheet 1 has been stuck onto the adherend, this gas will escape from the penetrating passages 31 formed in the pressure-sensitive adhesive layer 3 of the pressure-sensitive adhesive sheet 1 via the recesses 21 in the substrate 2 to the outside of the side edges of the pressure-sensitive adhesive sheet 1, whereby the pressure-sensitive adhesive sheet 1 is prevented from blistering.

[Second embodiment]

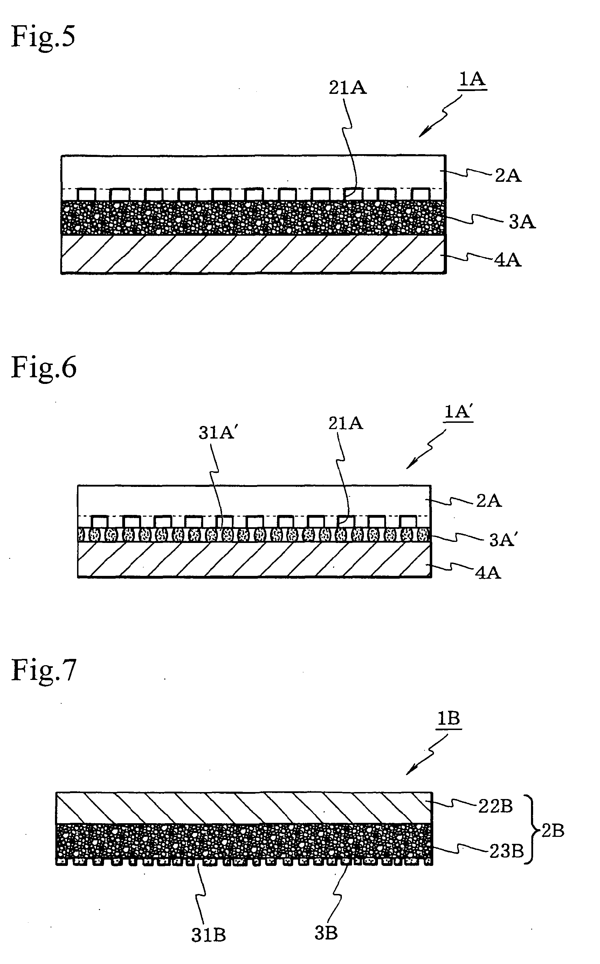

A first example of a pressure-sensitive adhesive sheet according to a second embodiment of the present invention is shown in FIG. 5, and a second example thereof is shown in FIG. 6.

The pressure-sensitive adhesive sheet 1A or 1A' according to the second embodiment has the same constitution as the pressure-sensitive adhesive sheet 1 according to the first embodiment except that the penetrating passages in the pressure-sensitive adhesive layer 3A or 3A' are formed by foam cells.

The penetrating passages in the pressure-sensitive adhesive layer 3A of the pressure-sensitive adhesive sheet 1A shown in FIG. 5 are formed from open cells that penetrate through the pressure-sensitive adhesive layer 3A in the thickness direction, or closed cells that are capable of penetrating through the pressure-sensitive adhesive layer 3A in the thickness direction upon the foam film or walls between foam cells being broken by external force. The penetrating passages in the pressure-sensitive adhesive layer 3A do not necessarily have to each penetrate through the pressure-sensitive adhesive layer 3A independently.

Meanwhile, the penetrating passages 31A' in the pressure-sensitive adhesive layer 3A' of the pressure-sensitive adhesive sheet 1A' shown in FIG. 6 are formed from individual cells that penetrate through the pressure-sensitive adhesive layer 3A' in the thickness direction due to the foam film disappearing at surface portions of the pressure-sensitive adhesive layer 3A' (the upper surface and the lower surface in FIG. 6), or individual cells for which the foam film is present at surface portions of the pressure-sensitive adhesive layer 3A' (the upper surface and/or the lower surface in FIG. 6) but which are capable of penetrating through the pressure-sensitive adhesive layer 3A' in the thickness direction upon the foam film being broken by external force.

Such a pressure-sensitive adhesive layer 3A or 3A' can be formed through a method in which the pressure-sensitive adhesive is foamed before being coated on and then the foamed pressure-sensitive adhesive is coated onto the release treated surface of the release liner 4A, or a method in which the pressure-sensitive adhesive is coated onto the release treated surface of the release liner 4A and then the pressure-sensitive adhesive is foamed. The foaming of the pressure-sensitive adhesive can be carried out using a foaming agent dispersion method, a gas incorporation method, a water/solvent vaporization method, a chemical reaction method, or the like. In particular, the pressure-sensitive adhesive layer 3A' shown in FIG. 6 is preferably formed using a water/solvent vaporization method in which water or an organic solvent for forming the foam cells is added to the pressure-sensitive adhesive in an amount of approximately 1 to 100 parts by weight per 100 parts by weight of solids in the main component of the pressure-sensitive adhesive, the pressure-sensitive adhesive coating agent thus obtained is coated onto the release treated surface of the release liner 4A, and then the water or organic solvent is vaporized by heating or the like so as to make regions where the water or organic solvent is present into foam cells.

As the foaming agent used in the foaming agent dispersion method, for example one or a plurality selected from organic foaming agents such as azobisisobutyronitrile, azodicarbonamide and benzenesulfonylhydrazides, inorganic foaming agents such as sodium hydrogencarbonate and ammonium carbonate, microcapsules, and so on can be used. These foaming agents are preferably added in an amount of approximately 1 to 50 parts by weight per 100 parts by weight of solids in the main component of the pressure-sensitive adhesive.

The pressure-sensitive adhesive coating agent is preferably applied onto the release treated surface of the release liner 4A using a coater such as a roll coater, a knife coater, a roll knife coater, an air knife coater, a die coater, a bar coater, a gravure coater, or a curtain coater, and then dried.

The thickness of the pressure-sensitive adhesive layer 3A in the pressure-sensitive adhesive sheet 1A shown in FIG. 5 is preferably 5 to 300 $\mu$m, particularly preferably 10 to 150 $\mu$m. Moreover, the voidage of the pressure-sensitive adhesive layer 3A is preferably 5 to 80%, particularly preferably 10 to 70%. If the voidage of the pressure-sensitive adhesive layer 3A is less than 5%, then it will be difficult for gas to escape from the pressure-sensitive adhesive layer 3A, whereas if the voidage is greater than 80%, then the adhesive strength of the pressure-sensitive adhesive layer 3A may decrease.

Meanwhile, the thickness of the pressure-sensitive adhesive layer 3A' in the pressure-sensitive adhesive sheet 1A' shown in FIG. 6 is preferably 1 to 300 $\mu$m, particularly preferably 3 to 100 $\mu$m.

The diameter of the penetrating passages 31' in the pressure-sensitive adhesive layer 3A' (in the present embodiment, the penetrating passages 31' are formed by individual cells, and hence the horizontal cross sectional shape thereof is approximately circular) is preferably 0.1 to 2000 $\mu$m, particularly preferably 0.5 to 1500 $\mu$m. If the diameter of the penetrating passages 31' is less than 0.1 $\mu$m, then it will difficult for gas to pass through the penetrating passages 31', whereas if the diameter of the penetrating passages 31' is greater than 2000 $\mu$m, then the adhesive strength of the pressure-sensitive adhesive layer 3A' may decrease. Note that the diameter of the penetrating passages 31' may change in the thickness direction of the pressure-sensitive adhesive layer 3A' as shown in FIG. 6.

The number density of the penetrating passages 31' (foam cells) in the pressure-sensitive adhesive layer 3A' is preferably 30 to 100,000 per 100 cm$^2$, particularly preferably 100 to 50,000 per 100 cm$^2$. If the number density of the penetrating passages 31' is less than 30 per 100 cm$^2$, then it will be difficult for gas to escape, whereas if the number density of the penetrating passages 31' is greater than 100,000 per 100 cm$^2$, then the adhesive strength of the pressure-sensitive adhesive layer 3A' may decrease.

The pressure-sensitive adhesive sheet 1A or 1A' according to the present embodiment can be manufactured using a method in which the pressure-sensitive adhesive layer 3A or 3A' formed on the release treated surface of the release liner 4A, and the rear face of the substrate 2A in the rear face of which have been formed the recesses 21A are superposed together.

When sticking the pressure-sensitive adhesive sheet 1A or 1A' onto an adherend, the release liner 4A is stripped off from the pressure-sensitive adhesive layer 3A or 3A', the pressure-sensitive adhesive sheet 1A or 1A' is pressed onto the adherend so that the pressure-sensitive adhesive surface of the exposed pressure-sensitive adhesive layer 3A or 3A' is made to be in close contact with the adherend. At this time, air between the adherend and the pressure-sensitive adhesive surface of the pressure-sensitive adhesive layer 3A or 3A' escapes from the foam cells in the pressure-sensitive adhesive layer 3A or 3A' via the recesses 21A in the substrate 2A to the outside of the side edges of the pressure-sensitive adhesive sheet 1A or 1A' , and hence air tends not to be caught up between the adherend and the pressure-sensitive adhesive surface, i.e. air entrapment is prevented from occurring. Even if air is caught up so that air entrapment occurs, by re-pressing the air-entrapped portion or an air-entrapped portion surrounding portion including the air-entrapped portion, the air can be made to escape from the foam cells in the pressure-sensitive adhesive layer 3A or 3A' via the recesses 21A in the substrate 2A to the outside of the side edges of the pressure-sensitive adhesive sheet 1A, thus eliminating the air entrapment. Such elimination of air entrapment is possible even after a long time has elapsed after the sticking on of the pressure-sensitive adhesive sheet 1A or 1A'.

Moreover, even in the case that the foam cells in the pressure-sensitive adhesive layer 3A or 3A' do not penetrate through the pressure-sensitive adhesive layer 3A or 3A' in the thickness direction in an ordinary state, upon the pressure-sensitive adhesive sheet 1A or 1A' being compression-bonded on or the like, the foam film or walls between foam cells will be broken so that penetrating passages are formed by the foam cells, whereby air entrapment can be prevented or eliminated as above.

Meanwhile, even if gas is emitted from the adherend after the pressure-sensitive adhesive sheet 1A or 1A' has been stuck onto the adherend, this gas will escape from the foam cells in the pressure-sensitive adhesive layer 3A or 3A' via the recesses 21A in the substrate 2A to the outside of the side edges of the pressure-sensitive adhesive sheet 1A or 1A', whereby the pressure-sensitive adhesive sheet 1A or 1A' is prevented from blistering.

Moreover, even in the case that the foam cells in the pressure-sensitive adhesive layer 3A or 3A' do not penetrate through the pressure-sensitive adhesive layer 3A or 3A' in the thickness direction in an ordinary state, the foam film or walls between foam cells will be broken by the pressure of the emitted gas or the like so that penetrating passages are formed by the foam cells, whereby blistering can be prevented as above.

[Third embodiment]

FIG. 7 is a sectional view of a pressure-sensitive adhesive sheet 1B according to a third embodiment of the present invention.

As shown in FIG. 7, the pressure-sensitive adhesive sheet 1B according to the present embodiment comprises a substrate 2B and a pressure-sensitive adhesive layer 3B laminated together.

The substrate 2B in the present embodiment is constituted from a surface substrate 22B, and a foam layer 23B made of a foam. There are no particular limitations on the material of the surface substrate 22B, examples including a resin film, a metal film, a resin film having a metal deposited thereon by vapor deposition, paper, a nonwoven cloth, or a laminate of the above. The thickness of the surface substrate 22B is generally approximately 1 to 500 $\mu$m, preferably 3 to 300 $\mu$m.

Meanwhile, as the foam constituting the foam layer 23B, for example, a foam obtained by foaming a resin such as a poly(meth)acrylate, polystyrene, a polyurethane, polyethylene, polypropylene, polyvinyl chloride, cellulose acetate, rubber, or silicone can be used. Note, however, that the foam must contain open cells through which gas can pass.

The voidage of the foam layer 23B is preferably 5 to 85%, particularly preferably 10 to 75%. If the voidage of the foam layer 23B is less than 5%, then it will be difficult for gas to escape from the foam layer 23B, whereas if the voidage of the foam layer 23B is greater than 85%, then the mechanical strength of the foam layer 23B, and hence the pressure-sensitive adhesive sheet 1B, may decrease.

The thickness of the foam layer 23B is preferably 10 to 800 $\mu$m, particularly preferably 35 to 600 $\mu$m. If the thickness of the foam layer 23B is less than 10 $\mu$m, then it will be difficult for gas to escape from the foam layer 23B, whereas if the thickness of the foam layer 23B is greater than 800 $\mu$m, there will be no improvement in the effect with regard to gas escape, and hence the pressure-sensitive adhesive sheet 1B will become unnecessarily thick.

The pressure-sensitive adhesive layer 3B in the present embodiment is formed directly on the foam layer 23B of the substrate 2B. The pressure-sensitive adhesive layer 3B has formed therein a plurality of penetrating passages 31B that communicate with cell openings in the foam layer 23B.

There are no particular limitations on the type of the pressure-sensitive adhesive constituting the pressure-sensitive adhesive layer 3B so long as this pressure-sensitive adhesive is a material in which the penetrating passages 31B can be formed as described above; the pressure-sensitive adhesive may be any of an acrylic type, a polyester type, a polyurethane type, a rubber type, a silicone type, or the like. Moreover, the pressure-sensitive adhesive may be any of an emulsion type, a solvent type, or a solvent-less type, and may be either a crosslinked type, or a non-crosslinked type.

For such a pressure-sensitive adhesive layer 3B, by applying the coating agent of the pressure-sensitive adhesive for constituting the pressure-sensitive adhesive layer 3B onto the foam layer 23B of the substrate 2B using, for example, a coater such as a roll coater, a knife coater, a roll knife coater, an air knife coater, a die coater, a bar coater, a gravure coater, or a curtain coater, the pressure-sensitive adhesive layer 3B can be formed and at the same time the penetrating passages 31B that communicate with cell openings in the foam layer 23B can be formed. That is, the penetrating passages 31B in the pressure-sensitive adhesive layer 3B are formed through the pressure-sensitive adhesive not blocking up all of the cell openings in the foam layer 23B when the pressure-sensitive adhesive is applied onto the foam layer 23B.

Here, the viscosity of the pressure-sensitive adhesive coating agent is preferably made to be not more than 20, 000 mPa·s at 6 rpm with a B-type viscometer. If the viscosity of the pressure-sensitive adhesive coating agent is too high, then the pressure-sensitive adhesive will block up the cell openings in the foam layer 23B, and hence the penetrating passages 31B will not be readily formed.

The thickness of application of the pressure-sensitive adhesive (after drying), i.e. the thickness of the pressure-sensitive adhesive layer 3B, is preferably 0.5 to 30 $\mu$m, particularly preferably 2 to 25 $\mu$m. Note, however, that the thickness of application of the pressure-sensitive adhesive does not have to be even, but rather thick regions and thin regions (or regions where the pressure-sensitive adhesive is not applied) may be provided. In this case, the penetrating passages 31B are easily formed in the regions where the pressure-sensitive adhesive coating agent is applied on thinly.

The diameter of the penetrating passages 31B formed in the pressure-sensitive adhesive layer 3B (in the present embodiment, the horizontal cross sectional shape of the penetrating passages 31B is approximately circular) is preferably 0.1 to 2000 $\mu$m, particularly preferably 0.5 to 1500 $\mu$m. If the diameter of the penetrating passages 31B is less than 0.1 $\mu$m, then it will difficult for gas to pass through the penetrating passages 31B, whereas if the diameter of the penetrating passages 31B is greater than 2000 $\mu$m, then the adhesive strength of the pressure-sensitive adhesive layer 3B may decrease.

The number density of the penetrating passages 31B is preferably 30 to 100,000 per 100 $cm^2$, particularly preferably 100 to 50,000 per 100 $cm^2$. If the number density of the penetrating passages 31B is less than 30 per 100 $cm^2$, then it will be difficult for gas to escape, whereas if the number density of the penetrating passages 31B is greater than 100,000 per 100 $cm^2$, then the adhesive strength of the pressure-sensitive adhesive layer 3B may decrease.

To prevent the pressure-sensitive adhesive from blocking up the cell openings in the foam layer 23B of the substrate 2B, it is preferable to (1) add a foaming agent to the pressure-sensitive adhesive coating agent, and foam the foaming agent so that pressure-sensitive adhesive filling up cell openings in the foam layer 23B is split open, or (2) before forming the pressure-sensitive adhesive layer 3B, apply or spray a volatile substance such as water or an organic solvent, or a solution or dispersion of a resin in such a volatile substance, onto the surface or surface layer of the foam layer 23B, and then after the pressure-sensitive adhesive coating agent has been applied on, vaporize the volatile substance so that pressure-sensitive adhesive filling up cell openings in the foam layer 23B is split open. In the case of (2), if a resin is used, then the resin acts as a primer, and hence there is an advantage that the pressure-sensitive adhesive fixing ability can be improved.

Moreover, before forming the pressure-sensitive adhesive layer 3B on the foam layer 23B, to improve the pressure-sensitive adhesive fixing ability, a resin may be applied as a primer onto the surface of surface layer of the foam layer 23B. As such a resin, for example, a polyester, a polyurethane, a chlorinated polyolefin, polyvinyl chloride, polyvinylidene chloride, an epoxy resin, an acrylic resin, an ethylene-vinyl acetate copolymer, an ethylene-vinyl alcohol copolymer, an aminoethylated resin, or the like can be used alone, or a plurality thereof can be used mixed together.

In the above description, the penetrating passages 31B in the pressure-sensitive adhesive layer 3B are formed by ensuring that the pressure-sensitive adhesive does not block up cell openings in the foam layer 23B of the substrate 2B when applying the pressure-sensitive adhesive onto the foam layer 23B; however, there is no limitation to this in the present invention, but rather a pressure-sensitive adhesive layer 3 having penetrating passages 31 therein may be formed on the foam layer 23B of the substrate 2B by coating the pressure-sensitive adhesive onto the foam layer 23B in a prescribed pattern, or the pressure-sensitive adhesive may be coated onto a release liner in a prescribed pattern so as to form a pressure-sensitive adhesive layer 3 having penetrating passages 31 therein on the release liner, before superposing the pressure-sensitive adhesive layer 3 formed on the release liner onto the foam layer 23B of the substrate 2B.

In this case, there are no particular limitations on the pattern shape for the pressure-sensitive adhesive layer 3B, i.e. on the horizontal cross sectional shape of the penetrating passages 31B and the arrangement of the penetrating passages 31B; a pattern shape such that penetrating passages 31B having a size as stipulated earlier (this size is the cross sectional area stipulated by the diameter of the approximately circular penetrating passages 31B) are formed with a number density as stipulated earlier is suitable.

Moreover, the substrate 2B in the present embodiment is constituted from the surface substrate 22B, and the foam layer 23B made of a foam; however, there is no limitation to this in the present invention, but rather the substrate 2B may be constituted from a foam only.

When sticking the pressure-sensitive adhesive sheet 1B onto an adherend, the pressure-sensitive adhesive sheet 1B is pressed onto the adherend so that the pressure-sensitive adhesive layer 3B is made to be in close contact with the adherend. At this time, air between the adherend and the pressure-sensitive adhesive surface of the pressure-sensitive adhesive layer 3B escapes from the penetrating passages 31B formed in the pressure-sensitive adhesive layer 3B via the open cells in the foam layer 23B of the substrate 2B to the outside of the side edges of the pressure-sensitive adhesive sheet 1B, and hence air tends not to be caught up between the adherend and the pressure-sensitive adhesive surface, i.e. air entrapment is prevented from occurring. Even if air is caught up so that air entrapment occurs, by re-pressing the air-entrapped portion or an air-entrapped portion surrounding portion including the air-entrapped portion, the air can be made to escape from the penetrating passages 31B in the pressure-sensitive adhesive layer 3B via the open cells in the foam layer 23B to the outside of the side edges of the pressure-sensitive adhesive sheet 1B, thus eliminating the air entrapment. Such elimination of air entrapment is possible even after a long time has elapsed after the sticking on of the pressure-sensitive adhesive sheet 1B.

Moreover, even if gas is emitted from the adherend after the pressure-sensitive adhesive sheet 1B has been stuck onto the adherend, this gas will escape from the penetrating passages 31B formed in the pressure-sensitive adhesive layer 3B of the pressure-sensitive adhesive sheet 1B via the open cells in the foam layer 23B to the outside of the side edges of the pressure-sensitive adhesive sheet 1B, whereby the pressure-sensitive adhesive sheet 1B is prevented from blistering.

Furthermore, with the pressure-sensitive adhesive sheet 1B according to the present embodiment, even in the case that protuberances such as paint bumps that have arisen during painting are formed on the adherend, or foreign matter such as dust or dirt is attached to the adherend, the foam layer 23B of the substrate 2 of the pressure-sensitive adhesive sheet 1B will absorb these protuberances or protrusions of the foreign matter, and hence the good appearance of the pressure-sensitive adhesive sheet 1B can be maintained, and reattachment or the like of the pressure-sensitive adhesive sheet 1B can be avoided.

[Fourth embodiment]

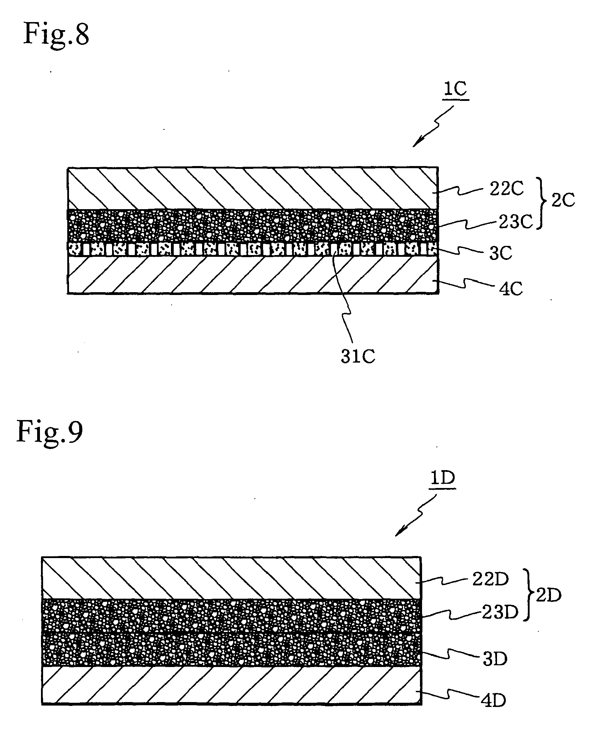

FIG. 8 is a sectional view of a pressure-sensitive adhesive sheet 1C according to a fourth embodiment of the present invention.

The pressure-sensitive adhesive sheet 1C according to the fourth embodiment is a combination of the pressure-sensitive adhesive layer 3 and the release liner 4 of the pressure-sensitive adhesive sheet 1 according to the first embodiment, and the substrate 2B of the pressure-sensitive adhesive sheet 1B according to the third embodiment. Such a pressure-sensitive adhesive sheet 1C can be manufactured by superposing together a pressure-sensitive adhesive layer 3C having penetrating passages 31C therein that has been formed on a release treated surface of a release liner 4C, and a foam layer 23C of a substrate 2C comprising a surface substrate 22C and the foam layer 23C.

For the pressure-sensitive adhesive sheet 1C according to the present embodiment, effects like those for the pressure-sensitive adhesive sheet 1B according to the third embodiment described earlier are obtained.

[Fifth embodiment]

FIG. 9 is a sectional view of a pressure-sensitive adhesive sheet 1D according to a fifth embodiment of the present invention.

The pressure-sensitive adhesive sheet 1D according to the fifth embodiment is a combination of the pressure-sensitive adhesive layer 3A and the release liner 4A of the pressure-sensitive adhesive sheet 1A according to the second embodiment, and the substrate 2B of the pressure-sensitive adhesive sheet 1B according to the third embodiment. Such a pressure-sensitive adhesive sheet 1D can be manufactured, for example, using a method in which a pressure-sensitive adhesive layer 3D formed on a release treated surface of a release liner 4D, and a foam layer 23D of a substrate 2D comprising a surface substrate 22D and the foam layer 23D are superposed together, or a method in which the release liner 4D, the pressure-sensitive adhesive layer 3D, the foam layer 23D, and the surface substrate 22D are laminated together in order, or a method in which the surface substrate 22D, the foam layer 23D, the pressure-sensitive adhesive layer 3D, and the release liner 4D are laminated together in order.

For the pressure-sensitive adhesive sheet 1D according to the present embodiment, effects like those for the pressure-sensitive adhesive sheet 1B according to the third embodiment described earlier are obtained.

Examples

Following is a more detailed description of the present invention through working examples and so on; however, the scope of the present invention is not limited by these working examples and so on.

[Working Example 1] (recesses + air penetrating passages through holes in sealer undercoat layer 1)

Recesses of width 50 $\mu$m and depth 20 $\mu$m were formed at a pitch of 200 $\mu$m in a square lattice shape in plan view by etching in one surface of a foamed polyethylene terephthalate film (made by Toyobo Ltd., Crisper K2424, thickness: 100 $\mu$m), thus obtaining a substrate. The occupancy of the recesses out of the surface of the substrate in which the recesses were formed was 44%.

Moreover, a polyethylene resin was laminated to a thickness of 20 $\mu$m as a gas barrier layer on one surface of woodfree paper (weight: 100 g/m$^2$, voidage: 15%) as a release liner support. A sealer (kaolin clay / SBR, solid ratio 100/100) was then applied as an undercoat layer using an air knife coater such that the thickness after drying would be 2 $\mu$m onto the other surface of the woodfree paper, and heating was carried out for 1 minute at 100 °C. As a result, holes of diameter approximately 100 $\mu$m were formed at a number density of approximately 1000 per 100 cm$^2$ in the undercoat layer.

A silicone resin (made by Dow Corning Toray Co., Ltd., SRX-211) to which had been added 1 wt% of a tin-based catalyst (made by Dow Corning Toray Co., Ltd., SRX-212) was applied onto the undercoat layer using a bar coater such that the thickness after drying would be 0.7 $\mu$m, and heating was carried out for 2 minutes at 130 °C to form a release agent layer, thus obtaining a release liner. The release agent layer of the release liner obtained also had holes formed therein, with the diameter and number density of the holes in the undercoat layer being maintained approximately as is for the holes in the release agent layer.

Moreover, 100 parts by weight of an acrylic pressure-sensitive adhesive (made by Toyo Ink Mfg. Co., Ltd., Oribain BPS-1109) was mixed with 3 parts by weight of an isocyanate type crosslinking agent (made by Nippon Polyurethane Industry Co., Ltd., Coronate L), and toluene was further added as a diluting solvent so as to adjust the viscosity to 1000 mPa·s, whereby a pressure-sensitive adhesive coating agent was obtained.

The pressure-sensitive adhesive coating agent obtained was applied onto the release agent layer of the release liner using a knife coater such that the thickness after drying of the pressure-sensitive adhesive layer would be 30 $\mu$m, and heating was carried out for 2 minutes at 100 °C, thus forming a pressure-sensitive adhesive layer. As a result, penetrating passages of diameter approximately 130 $\mu$m were formed at a number density of approximately 900 per 100 cm$^2$ in the pressure-sensitive adhesive layer.

The surface of the substrate in which the recesses were formed, and the pressure-sensitive adhesive layer formed on the release agent layer of the release liner were superposed together, thus obtaining a pressure-sensitive adhesive sheet.

[Working Example 2] (recesses + air penetrating passages through holes in sealer undercoat layer 2)

A sealer (kaolin clay / SBR, solid ratio 100/100) was applied as an undercoat layer using an air knife coater such that the thickness after drying would be 3 $\mu$m onto the other surface of woodfree paper as a release liner support on one surface of which had been laminated a polyethylene resin as a gas barrier layer as in Working Example 1, heating was carried out for 1 minute at 80 °C, and then a silicone resin (made by Dow Corning Toray Co., Ltd., SRX-211) to which had been added 1 wt% of a tin-based catalyst (made by Dow Corning Toray Co., Ltd., SRX-212) was applied on using a bar coater such that the thickness after drying would be 0.7 $\mu$m, and heating was carried out for 2 minutes at 150 °C. As a result, a release liner was obtained in which holes of diameter approximately 180 $\mu$m that penetrated through the undercoat layer and the release agent layer were formed at a number density of approximately 700 per 100 cm$^2$.

Using the release liner obtained, a pressure-sensitive adhesive sheet was produced as in Working Example 1. Penetrating passages of diameter approximately 200 $\mu$m were formed at a number density of approximately 600 per 100 cm$^2$ in the pressure-sensitive adhesive layer.

[Working Example 3] (recesses + air penetrating passages through holes in laminated undercoat layer)

Low density polyethylene was laminated to a thickness of 25 $\mu$m as a gas barrier layer on one surface of woodfree paper (weight: 100 g/m$^2$, voidage: 15%) as a release liner support, and low density polyethylene was laminated to a thickness of 17 $\mu$m as an undercoat layer on the other surface.

A silicone resin (made by Dow Corning Toray Co., Ltd., SRX-211) to which had been added 1 wt% of a tin-based catalyst (made by Dow Corning Toray Co., Ltd., SRX-212) was applied onto the low density polyethylene layer constituting the undercoat layer using a bar coater such that the thickness after drying would be 0.7 $\mu$m, and heating was carried out for 2 minutes at 130 °C to form a release agent layer. As a result, a release liner was obtained in which holes of diameter approximately 80 $\mu$m that penetrated through the undercoat layer and the release agent layer were formed at a number density of approximately 1600 per 100 cm$^2$.

Using the release liner obtained, a pressure-sensitive adhesive sheet was produced as in Working Example 1. Penetrating passages of diameter approximately 100 $\mu$m were formed at a number density of approximately 1300 per 100 cm$^2$ in the pressure-sensitive adhesive layer.

[Working Example 4] (recesses + air penetrating passages through undercoat layer foaming)

100 parts by weight of a sealer (kaolin clay / SBR, solid ratio 100/100) to which had been added 2 parts by weight of sodium hydrogencarbonate and 2 parts by weight of 4,4'-oxybis(benzenesulfonylhydrazide) was applied as an undercoat layer using an air knife coater such that the thickness after drying would be 2 μm onto the other surface of woodfree paper as a release liner support on one surface of which had been laminated a polyethylene resin as a gas barrier layer as in Working Example 1, and heating was carried out for 1 minute at 130 °C. As a result, holes of diameter approximately 50 μm were formed at a number density of approximately 3500 per 100 cm$^2$ in the undercoat layer.

A release agent layer was formed on the undercoat layer as in Working Example 1, thus obtaining a release liner. The release agent layer of the release liner obtained also had holes formed therein, with the diameter and number density of the holes in the undercoat layer being maintained approximately as is for the holes in the release agent layer.

Using the release liner obtained, a pressure-sensitive adhesive sheet was produced as in Working Example 1. Penetrating passages of diameter approximately 70 μm were formed at a number density of approximately 3000 per 100 cm$^2$ in the pressure-sensitive adhesive layer.

[Working Example 5] (recesses + laser penetrating passages)

100 parts by weight of an acrylic pressure-sensitive adhesive (made by Nippon Synthetic Chemical Industry Co., Ltd., Coponyl N-2147, solid content 35 wt%) was mixed with 35 parts by weight of ethyl acetate, and then 1 part by weight of an isocyanate type crosslinking agent (made by Nippon Polyurethane Industry Co., Ltd., Coronate L) was mixed in, and the mixture was stirred thoroughly to obtain a pressure-sensitive adhesive coating agent.

The pressure-sensitive adhesive coating agent was applied using a knife coater such that the thickness after drying would be 30 μm onto the release treated surface of a heavy release force type release liner (made by Lintec Corporation, PET3811) comprising a polyethylene terephthalate sheet having a silicone resin release agent applied on one surface thereof, and drying was carried out for 1 minute at 90 °C. The release treated surface of a light release force type release liner (made by Lintec Corporation, PET3801) as a process material comprising a polyethylene terephthalate sheet having a silicone resin release agent applied on one surface thereof was placed over and superposed to the pressure-sensitive adhesive layer thus formed, whereby a laminate having a three-layer structure was obtained.

The laminate obtained was irradiated with a carbon dioxide laser from the heavy release force type release liner side, thus forming penetrating passages of diameter approximately 90 μm at a number density of approximately 2500 per 100 cm$^2$ in the surface of the pressure-sensitive adhesive layer on the light release force type release liner side.

The light release force type release liner was stripped off from the laminate in which the penetrating passages had been formed as described above, and the exposed pressure-sensitive adhesive layer, and the surface in which recesses had been formed of a substrate obtained as in Working Example 1 were superposed together, thus obtaining a pressure-sensitive adhesive sheet.

[Working Example 6] (recesses + patterned penetrating passages)

A UV-curable pressure-sensitive adhesive (made by Teikoku Printing Inks Mfg. Co., Ltd., UV TAC-4000) was applied in a pattern onto the surface in which recesses had been formed of a substrate obtained as in Working Example 1 using a screen printing method such that the thickness after curing would be 25 μm and such that regions where there was no pressure-sensitive adhesive would form holes of diameter 1000 μm at a number density of 1156 per 100 cm$^2$.

The pressure-sensitive adhesive layer thus formed was irradiated with a metal halide lamp (80 W/cm × 1 lamp, height: 7.5 cm) at a rate of 10 m/min to precure the pressure-sensitive adhesive layer, and then the release treated surface of a release liner (made by Lintec Corporation, PET3811) comprising a polyethylene terephthalate sheet having a silicone resin release agent applied on one surface thereof was placed over and superposed to the precured pressure-sensitive adhesive layer, thus obtaining a laminate having a three-layer structure.

The laminate obtained was irradiated again with metal halide lamps (120 W/cm × 2 lamps, height: 10 cm) at a rate of 10 m/min to cure the pressure-sensitive adhesive layer, whereby a pressure-sensitive adhesive sheet was obtained in which penetrating passages of diameter 1000 μm were formed in the pressure-sensitive adhesive layer at a number density of 1156 per 100 cm$^2$.

[Working Example 7] (recesses + foamed pressure-sensitive adhesive layer 1)

100 parts by weight of an acrylic pressure-sensitive adhesive (made by Nippon Synthetic Chemical Industry Co., Ltd., Coponyl N-2147, solid content 35 wt%) was mixed with 35 parts by weight of ethyl acetate, then 0.03 parts by weight of an epoxy type crosslinking agent (made by Mitsubishi Gas Chemical Company Inc., Tetrad C) was mixed in and the mixture was stirred thoroughly, and then 15 parts by weight of water for forming foam cells was further added, and the mixture was stirred thoroughly to obtain a pressure-sensitive adhesive coating agent.

The pressure-sensitive adhesive coating agent was applied using a knife coater such that the thickness after drying would be 35 μm onto the release treated surface of a release liner (made by Lintec Corporation, PET3811) comprising a polyethylene terephthalate sheet having a silicone resin release agent applied on one surface thereof, and drying was carried out for 1 minute at 90 °C, and then for 1 minute at 120 °C. The pressure-sensitive adhesive layer thus obtained had penetrating passages (individual cells) capable of penetrating through in a vertical direction formed therein through foaming of the water. The diameter of these penetrating passages was 80 to 120 $\mu$m, and the number density was approximately 9000 per 100 cm$^2$.

The surface in which recesses had been formed of a substrate obtained as in Working Example 1 was placed over and superposed to the pressure-sensitive adhesive layer, thus obtaining a pressure-sensitive adhesive sheet.

[Working Example 8] (recesses + foamed pressure-sensitive adhesive layer 2)

A mixture obtained by diluting 7 parts by weight of a mixture of 4,4'-oxybis(benzenesulfonylhydrazide) and sodium hydrogencarbonate mixed together in a 1:1 weight ratio with 40 parts by weight of ethyl acetate and stirring was immediately added as a foaming agent to 100 parts by weight of an acrylic pressure-sensitive adhesive (made by Nippon Synthetic Chemical Industry Co., Ltd., Coponyl N-2147, solid content 35 wt%), the mixture was stirred thoroughly, and then 0.03 parts by weight of an epoxy type crosslinking agent (made by Mitsubishi Gas Chemical Company Inc., Tetrad C) was mixed in and the mixture was stirred thoroughly, whereby a pressure-sensitive adhesive coating agent was obtained.

The pressure-sensitive adhesive coating agent was applied using a knife coater such that the thickness after drying would be 35 $\mu$m onto the release treated surface of a release liner (made by Lintec Corporation, PET3811) comprising a polyethylene terephthalate sheet having a silicone resin release agent applied on one surface thereof, and drying was carried out for 1 minute at 90 °C, and then for 5 minutes at 145 °C. The pressure-sensitive adhesive layer thus obtained had penetrating passages (open cells) capable of penetrating through in a vertical direction formed therein through the foamed pressure-sensitive adhesive, the voidage being approximately 15%.

The surface in which recesses had been formed of a substrate obtained as in Working Example 1 was placed over and superposed to the pressure-sensitive adhesive layer, thus obtaining a pressure-sensitive adhesive sheet.

[Working Example 9] (direct application on foam)

The pressure-sensitive adhesive coating agent obtained in Working Example 5 was applied using a knife coater such that the thickness after drying would be 2 $\mu$m onto the foam layer surface of a laminated sheet (made by L-Home Corporation, AL Suction Sheet) comprising a polyethylene terephthalate layer (thickness: 50 $\mu$m) as a substrate and a polyacrylic foam layer (thickness: 300 $\mu$m, voidage: 50%), and drying was carried out for 1 minute at 90 °C. The pressure-sensitive adhesive layer thus obtained had vertically penetrating passages of diameter 10 to 150 $\mu$m formed therein, the number density of the penetrating passages being approximately 10,000 per 100 cm$^2$.

The release treated surface of a release liner (made by Lintec Corporation, PET3811) comprising a polyethylene terephthalate sheet having a silicone resin release agent applied on one surface thereof was placed over and superposed to the pressure-sensitive adhesive layer, thus obtaining a pressure-sensitive adhesive sheet.

[Working Example 10] (patterned application on foam)

A UV-curable pressure-sensitive adhesive was applied in a pattern as in Working Example 6 onto the foam layer surface of a laminated sheet as in Working Example 9, and precuring, laminating on of a release liner, and curing of the pressure-sensitive adhesive layer were carried out as in Working Example 6, thus obtaining a pressure-sensitive adhesive sheet.

[Working Example 11] (pattern transfer onto foam)

A UV-curable pressure-sensitive adhesive was applied in a pattern as in Working Example 6 onto the release treated surface of a release liner (made by Lintec Corporation, PET3811) comprising a polyethylene terephthalate sheet having a silicone resin release agent applied on one surface thereof, and precuring was carried out as in Working Example 6. Next, the foam layer surface of a laminated sheet (two-layer structure) as in Working Example 9 was placed over and superposed to the precured pressure-sensitive adhesive layer, thus obtaining a four-layer structure.

The laminate obtained was irradiated again with metal halide lamps (120 W/cm x 2 lamps, height: 10 cm) at a rate of 10 m/min to cure the pressure-sensitive adhesive layer, whereby a pressure-sensitive adhesive sheet was obtained in which penetrating passages of diameter 1000 $\mu$m were formed in the pressure-sensitive adhesive layer at a number density of 1156 per 100 cm$^2$.

[Working Example 12] (foam + air penetrating passages)

A pressure-sensitive adhesive layer formed on the release agent layer of a release liner as in Working Example 1 was superposed onto the foam layer surface of a laminated sheet as in Working Example 9, thus obtaining a pressure-sensitive adhesive sheet.

[Working Example 13] (foam + laser penetrating passages)

The pressure-sensitive adhesive coating agent obtained in Working Example 5 was applied using a knife coater such that the thickness after drying would be 30 $\mu$m onto the release treated surface of a release liner (made by Lintec Corporation, PET3811) comprising a polyethylene terephthalate sheet having a silicone resin release agent applied on one surface thereof, and drying was carried out for 1 minute at 90 °C.
The foam layer surface of a laminated sheet as in Working Example 9 was placed over and superposed to the pressure-sensitive adhesive layer thus obtained, thus obtaining a laminate having a three-layer structure.
The laminate obtained was irradiated with a carbon dioxide laser from the release liner side to a depth of approximately 50 $\mu$m from the foam layer surface, thus forming penetrating holes of diameter approximately 100 $\mu$m in the surface of the pressure-sensitive adhesive layer on the release liner side at a hole density of approximately 2500 per 100 cm$^2$, whereby a pressure-sensitive adhesive sheet was obtained.

[Working Example 14] (foam + foamed pressure-sensitive adhesive layer

The pressure-sensitive adhesive coating agent obtained in Working Example 7 was applied using a knife coater such that the thickness after drying would be 35 $\mu$m onto the release treated surface of a release liner (made by Lintec Corporation, PET3811) comprising a polyethylene terephthalate sheet having a silicone resin release agent applied on one surface thereof, and drying was carried out for 1 minute at 90 °C, and then for 1 minute at 120 °C. The pressure-sensitive adhesive layer thus obtained had penetrating passages (individual cells) capable of penetrating through in a vertical direction formed therein through foaming of the water. The diameter of these penetrating passages was 80 to 120 $\mu$m, and the number density was approximately 9000 per 100 cm$^2$.
The foam layer surface of a laminated sheet as in Working Example 9 was placed over and superposed to the pressure-sensitive adhesive layer, thus obtaining a pressure-sensitive adhesive sheet.

[Comparative Example 1]

The pressure-sensitive adhesive coating agent obtained in Working Example 5 was applied using a knife coater such that the thickness after drying would be 30 $\mu$m onto the release treated surface of a release liner (made by Lintec Corporation, PET3811) comprising a polyethylene terephthalate sheet having a silicone resin release agent applied on one surface thereof, and drying was carried out for 1 minute at 90 °C.
A foamed polyethylene terephthalate film (made by Toyobo Ltd., Crisper K2424, thickness: 100 $\mu$m) was placed over and superposed to the pressure-sensitive adhesive layer thus obtained, thus obtaining a pressure-sensitive adhesive sheet.

[Comparative Example 2]

The pressure-sensitive adhesive coating agent obtained in Working Example 5 was applied using a knife coater such that the thickness after drying would be 30 $\mu$m onto the release treated surface of a release liner (made by Lintec Corporation, PET3811) comprising a polyethylene terephthalate sheet having a silicone resin release agent applied on one surface thereof, and drying was carried out for 1 minute at 90 °C.
The surface in which recesses had been formed of a substrate obtained as in Working Example 1 was placed over and superposed to the pressure-sensitive adhesive layer thus obtained, thus obtaining a pressure-sensitive adhesive sheet.

[Test Example]

For each of the pressure-sensitive adhesive sheets obtained in Working Examples 1 to 14 and Comparative Examples 1 and 2, an air entrapment removability test was carried out as follows, and moreover the appearance was judged visually.
Air entrapment removability test: The pressure-sensitive adhesive sheet was cut to 50 mm $\times$ 50 mm and stuck onto a melamine coated plate such that air entrapment occurred in a circle of diameter approximately 15 mm, and then the pressure-sensitive adhesive sheet was pressed on using a squeegee. Pressure-sensitive adhesive sheets for which the air entrapment was eliminated as a result were marked as "O", ones for which the air entrapment was reduced as "Δ", and ones for which the air entrapment remained as is as "×" .

The results of the tests are shown in Table 1.

[Table 1]

| | Air entrapment removability test | Appearance |
|---|---|---|
| Working Example 1 | O | Good |
| Working Example 2 | O | Good |
| Working Example 3 | O | Good |
| Working Example 4 | O | Good |
| Working Example 5 | O | Good |
| Working Example 6 | O | Good |
| Working Example 7 | O | Good |
| Working Example 8 | O | Good |
| Working Example 9 | O | Good |
| Working Example 10 | O | Good |
| Working Example 11 | O | Good |
| Working Example 12 | O | Good |
| Working Example 13 | O | Good |
| Working Example 14 | O | Good |
| Comparative Example 1 | × | Good |
| Comparative Example 2 | × | Good |

As can be seen from Table 1, the air entrapment could easily be eliminated for the pressure-sensitive adhesive sheets obtained in Working Examples 1 to 14.

INDUSTRIAL APPLICABILITY

The present invention can be favorably applied to pressure-sensitive adhesive sheet for which air entrapment or blistering is prone to occur, and a good appearance and adequate adhesive strength are required.

**Claims**

1. A pressure-sensitive adhesive sheet comprising a substrate, and a pressure-sensitive adhesive layer laminated on said substrate, the pressure-sensitive adhesive sheet **characterized in that**:

   gas-passing channels that communicate to the outside of the pressure-sensitive adhesive sheet are formed in at least the pressure-sensitive adhesive layer side of said substrate;
   a plurality of penetrating passages that penetrate or are capable of penetrating through said pressure-sensitive adhesive layer in a thickness direction are formed in said pressure-sensitive adhesive layer; and
   said gas-passing channels in said substrate and said penetrating passages in said pressure-sensitive adhesive layer communicate with one another.

2. The pressure-sensitive adhesive sheet according to claim 1, **characterized in that** recesses that continue as far as side edges of said substrate are provided in the pressure-sensitive adhesive layer side of said substrate.

3. The pressure-sensitive adhesive sheet according to claim 1, **characterized in that** at least the pressure-sensitive adhesive layer side of said substrate comprises a foam containing open cells.

4. The pressure-sensitive adhesive sheet according to any of claims 1 through 3, **characterized in that** said penetrating passages in said pressure-sensitive adhesive layer are formed through gas passing through said pressure-sensitive adhesive layer.

5. The pressure-sensitive adhesive sheet according to any of claims 1 through 3, **characterized in that** said penetrating passages in said pressure-sensitive adhesive layer are formed by laser processing.

6. The pressure-sensitive adhesive sheet according to any of claims 1 through 3, **characterized in that** said penetrating passages in said pressure-sensitive adhesive layer are formed by patterning when forming said pressure-sensitive adhesive layer.

7. The pressure-sensitive adhesive sheet according to any of claims 1 through 3, **characterized in that** said penetrating passages in said pressure-sensitive adhesive layer are constituted from foam cells.

8. A method of manufacturing a pressure-sensitive adhesive sheet, **characterized by** laminating or forming a pressure-sensitive adhesive layer having therein a plurality of penetrating passages that penetrate or are capable of penetrating through in a thickness direction of the layer onto one surface of a substrate at least said one surface of which is formed with gas-passing channels that communicate to the outside of the pressure-sensitive adhesive sheet, such that said gas-passing channels in said substrate and said penetrating passages in said pressure-sensitive adhesive layer communicate with one another.

9. The method of manufacturing a pressure-sensitive adhesive sheet according to claim 8, **characterized in that** recesses that continue as far as side edges of said substrate are provided in said one surface of said substrate so as to form said gas-passing channels in said substrate.

10. The method of manufacturing a pressure-sensitive adhesive sheet according to claim 8, **characterized in that** at least said one surface of said substrate comprises a foam containing open cells.

11. The method of manufacturing a pressure-sensitive adhesive sheet according to any of claims 8 through 10, **characterized in that** a pressure-sensitive adhesive layer is formed by coating a pressure-sensitive adhesive onto a release treated surface of a release liner said release treated surface of which is formed with a plurality of holes, and gas from the holes in said release liner is made to move to the outside of said pressure-sensitive adhesive layer so as form said penetrating passages in said pressure-sensitive adhesive layer.

12. The method of manufacturing a pressure-sensitive adhesive sheet according to claim 11, **characterized in that** said release liner has a support made of a material containing air and/or moisture, a release agent layer is formed by coating a release agent onto said support of said release liner, and air and/or water vapor from said support is made to move to the outside of said release agent layer so as to form holes in said release agent layer.

13. The method of manufacturing a pressure-sensitive adhesive sheet according to claim 11, **characterized in that** said release liner has a support made of a material containing air and/or moisture, an undercoat layer is formed on said support of said release liner, air and/or water vapor from said support is made to move to the outside of said undercoat layer so as to form holes in said undercoat layer, and a release agent is coated onto said undercoat layer having said holes therein so as to form a release agent layer having holes therein.

14. The method of manufacturing a pressure-sensitive adhesive sheet according to claim 11, **characterized in that** said release liner has a support made of a material containing air and/or moisture, an undercoat layer and a release agent layer are formed in order on said support of said release liner, and air and/or water vapor from said support is made to move to the outside of said release agent layer so as to form holes in said undercoat layer and said release agent layer.

15. The method of manufacturing a pressure-sensitive adhesive sheet according to any of claims 12 through 14, **characterized in that** a gas barrier layer is formed in advance on a non-release treated surface side of said support.

16. The method of manufacturing a pressure-sensitive adhesive sheet according to claim 11, **characterized in that** an undercoat layer having holes therein is formed on a support of said release liner with a foamed sealer, and a release agent is coated onto said undercoat layer having said holes therein so as to form a release agent layer having holes therein.

17. The method of manufacturing a pressure-sensitive adhesive sheet according to any of claims 8 through 10, **char-**

**acterized in that** said penetrating passages are formed in said pressure-sensitive adhesive layer by subjecting said pressure-sensitive adhesive layer to laser processing.

18. The method of manufacturing a pressure-sensitive adhesive sheet according to any of claims 8 through 10, **characterized in that** said penetrating passages are formed in said pressure-sensitive adhesive layer by forming foam cells in said pressure-sensitive adhesive layer.

19. The method of manufacturing a pressure-sensitive adhesive sheet according to claim 10, **characterized in that** a pressure-sensitive adhesive is directly coated onto said foam of said substrate, and penetrating passages that communicate with cell openings in said foam are formed in said pressure-sensitive adhesive layer.

20. The method of manufacturing a pressure-sensitive adhesive sheet according to claim 19, **characterized in that** the thickness of application of the pressure-sensitive adhesive is changed from region to region, and said penetrating passages that communicate with the cell openings in said foam are formed in regions where said pressure-sensitive adhesive layer is thin or regions where said pressure-sensitive adhesive layer is not formed.

21. The method of manufacturing a pressure-sensitive adhesive sheet according to any of claims 8 through 10, **characterized in that** said penetrating passages are formed in said pressure-sensitive adhesive layer by coating a pressure-sensitive adhesive in a prescribed pattern.

22. A release liner, **characterized in that** a plurality of holes of diameter 0.1 to 2000 $\mu$m that do not penetrate through the release liner are formed in a release treated surface side.

23. A method of manufacturing a release liner, **characterized by** coating a release agent onto a support made of a material containing air and/or moisture so as to form a release agent layer, and making air and/or water vapor from said support move to the outside of said release agent layer so as to form holes in said release agent layer.

24. A method of manufacturing a release liner, **characterized by** forming an undercoat layer on a support made of a material containing air and/or moisture, making air and/or water vapor from said support move to the outside of said undercoat layer so as to form holes in said undercoat layer, and coating a release agent onto said undercoat layer having said holes therein to form a release agent layer having holes therein.

25. A method of manufacturing a release liner, **characterized by** forming an undercoat layer and a release agent layer in order on a support made of a material containing air and/or moisture, and making air and/or water vapor from said support move to the outside of said release agent layer so as to form holes in said undercoat layer and said release agent layer.

26. The method of manufacturing a release liner according to any of claims 23 through 25, **characterized in that** a gas barrier layer is formed in advance on a non-release treated surface side of said support.

27. A method of manufacturing a release liner, **characterized by** forming on a support an undercoat layer having holes therein with a foamed sealer, and coating a release agent onto said undercoat layer having said holes therein to form a release agent layer having holes therein.

Fig.1

Fig.2

# Fig.3

(a)  — 41

(b)  — 41 — 42

(c)  431 — 43 — 41 — 42

(d)  441  431 — 44 — 43 — 41 — 42 } 4

(e)  431  441  31 — 3 — 44 — 43 — 41 — 42 } 4

# Fig.4

(a)

41

⇩

(b)

41
42

⇩

(c)

43
41
42

⇩

(d)

44
43
41
42

⇩

441   431

(e)

44
43   } 4
41
42

⇩   431   441   31

(f)

3
44
43   } 4
41
42

Fig.5

Fig.6

Fig.7

Fig.8

Fig.9

**INTERNATIONAL SEARCH REPORT**

| | International application No. |
|---|---|
| | PCT/JP2004/013122 |

**A. CLASSIFICATION OF SUBJECT MATTER**
Int.Cl⁷ C09J7/02

According to International Patent Classification (IPC) or to both national classification and IPC

**B. FIELDS SEARCHED**

Minimum documentation searched (classification system followed by classification symbols)
Int.Cl⁷ C09J7/02

Documentation searched other than minimum documentation to the extent that such documents are included in the fields searched

| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>A | JP 11-61059 A   (Rikidyne Co., Ltd.),<br>05 March, 1999 (05.03.99),<br>Claims; Par. No. [0014]<br>& KR 98033260 A          & CN 1184835 A<br>& US 5993927 A          & DE 69701248 D<br>& EP 839887 A | 1,3,7,8,10,<br>18,19<br>2,4-6,9,<br>11-17,20-27 |
| X<br><br>A | JP 7-133469 A   (Sekisui Chemical Co., Ltd.),<br>23 May, 1995 (23.05.95),<br>Claims; Par. No. [0005]<br>(Family: none) | 1,3,7,8,10,<br>18,19<br>2,4-6,9,<br>11-17,20-27 |
| X<br><br>A | JP 2-18482 A   (Nitto Denko Corp.),<br>22 January, 1990 (22.01.90),<br>Claims; page 2, upper right column, line 12 to<br>lower left column, 3rd line from the bottom<br>(Family: none) | 1,3,7,8,10,<br>18,19<br>2,4-6,9,<br>11-17,20-27 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>29 September, 2004 (29.09.04) | Date of mailing of the international search report<br>26 October, 2004 (26.10.04) |
|---|---|
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

| International application No. |
|---|
| PCT/JP2004/013122 |

C (Continuation).   DOCUMENTS CONSIDERED TO BE RELEVANT

| Category* | Citation of document, with indication, where appropriate, of the relevant passages | Relevant to claim No. |
|---|---|---|
| X<br><br>A | JP 56-78841 U1 (Matsushita Refrigeration Co.), 26 June, 1981 (26.06.81),<br>Claims<br>(Family: none) | 1,3,6-8,10, 18,19,21<br>2,4,5,9, 11-17,20, 22-27 |
| X<br><br>A | JP 11-323270 A (Minnesota Mining and Manufacturing Co.), 26 November, 1999 (26.11.99),<br>Claims; Par. Nos. [0044] to [0048]; Fig. 4<br>& AU 3781499 A          & CN 1300311 A<br>& DE 699142001 D       & EP 1095115 A<br>& KR 1043623 A          & US 6656567 B<br>& WO 99-58620 A1 | 1,3,7-9,18<br>2,4-6, 10-17,19-27 |
| A | JP 2003-253226 A (Dainippon Printing Co., Ltd.), 10 September, 2003 (10.09.03),<br>Claims<br>(Family: none) | 1-27 |
| A | JP 2002-180016 A (Dainippon Printing Co., Ltd.), 26 June, 2002 (26.06.02),<br>Claims<br>(Family: none) | 1-27 |
| A | JP 6-69971 A (Hitachi Chemical Co., Ltd.), 30 September, 1994 (30.09.94),<br>Claims<br>(Family: none) | 1-27 |

Form PCT/ISA/210 (continuation of second sheet) (January 2004)